# FASCICULE DE BREVET EUROPEEN

(11) **EP 0 601 653 B1**
(45) Date de publication et mention de la délivrance du brevet: **04.04.2001**
(21) Numéro de dépôt: 93203399.6
(22) Date de dépôt: 03.12.1993
(51) Int. Cl.: H04J 3/16

(54) **Système de transmission pour transmettre des informations à différents débits et station de transmission convenant à un tel système**
System zur Übertragung von Information mit unterschiedlichen Bitraten und Sendestation für ein solches System
Transmission system for the transmission of information of different bit rates and transmission station for such a system

(30) Priorité: 09.12.1992 FR 9214826
(43) Date de publication de la demande: 15.06.1994
(73) Titulaire: Koninklijke Philips Electronics N.V., 5621 BA Eindhoven (NL)
(72) Inventeur: Levardon, Pascal, Société Civile S.P.I.D., F-75008 Paris (FR)
(74) Mandataire: Chaffraix, Jean

(56) Documents cités:
- EP-A- 0 241 229
- US-A- 4 528 656
- US-A- 4 870 641
- TENTH INTERNATIONAL TELETRAFFIC CONGRESS, no.1, 9 Juin 1983, MONTREAL (CA) pages 3.1.1 - 3.1.6 GUY PUJOLLE ET AL. 'Troughput of a satellite channel-communication.'

## Description

La présente invention concerne un système de transmission de données offrant une pluralité de canaux élémentaires présentant un débit binaire élémentaire pour transmettre lesdites données, système comportant au moins une station de base comportant un circuit de répartition des canaux élémentaires, une pluralité de stations satellites comportant un circuit de recomposition de réception pour recevoir des données transmises par lesdits canaux élémentaires.

La présente invention concerne aussi une station de base et une station satellite, convenant à un tel système formé de telles stations.

L'invention trouve d'importantes applications pour offrir aux utilisateurs à bord d'automobiles des services variés de télécommunications : par exemple, des liaisons téléphoniques qui nécessitent une bande passante étroite et des liaisons vidéo qui, elles, ont besoin d'une bande passante très large. Ce type de service est offert par le système RNIS à large bande obéissant au protocole ATM. Ceci est décrit dans la publication : "Asynchronous Transfer Mode" de J-P Coudreuse et al. parue dans la revue Commutation & Transmission N° 3/1990. Se pose donc le problème d'allocation de ressources qui restent limitées surtout dans le domaine des radiotélécommunications.

Un système de ce genre est décrit dans le brevet des Etats-Unis d'Amérique N°4 870 641. Dans ce système un groupe de canaux déterminés est alloué pour assurer un débit de données élevé mais n'est pas nécessairement affecté à une seule communication. Ceci fait que ce système n'est pas adapté pour transmettre des informations dans les réseaux de radiomobiles pour lesquels les canaux sont des canaux fréquentiels utilisant la propagation hertzienne et pour lesquels il y a nécessité de relier des terminaux de nature différente. Pour des raisons de propagation, les canaux fréquentiels relatifs à une liaison entre une station de base et une station distante ne conviennent pas forcément pour une liaison avec une autre station distante. Aucune mesure n'est prévue, dans ce brevet cité, en ce qui concerne l'allocation dynamique des fréquences de transmission pour tenir compte de l'emplacement géographique de stations faisant partie du système et ce document ne donne aucune indication en ce qui concerne la transmission entre plusieurs utilisateurs simultanément.

Un système de ce genre est également décrit dans l'article de G.Pujoll et al. intitulé : "Throughput of a Satellite Channel-Communication" paru dans Tenth International Teletraffic Congress, Vol.1, Proc.10, 9 juin 1983, pages 3.1.1 à 3.1.6. Ce document divulgue une liaison entre une station terrestre et un satellite de radiocommunications pour transmettre une trame de signaux. Ce système n'est pas adapté aux exigences de trafic radioélectrique pour des utilisateurs désirant communiquer plutôt avec des débits qui varient en fonction de la nature des informations à transmettre.

L'invention propose donc un système du genre mentionné dans le préambule qui permet de gérer au mieux les ressources attribuées et de fournir aux utilisateurs des canaux adaptés au mieux aux exigences de l'utilisateur.

Pour cela, un tel système est remarquable en ce que le circuit de répartition est formé de circuit de répartition multivoies pour affecter à chaque station satellite un canal utilisateur formé d'un nombre variable de canaux élémentaires en fonction du débit exigé pour une communication avec la station de base.

La description suivante accompagnée des dessins ci-annexés, le tout donné à titre d'exemple non limitatif, fera bien comprendre comment l'invention peut être réalisée.
- La figure 1 montre un système conforme à l'invention.
- La figure 2 montre la constitution d'une cellule de données utilisée dans le système de la figure 1.
- La figure 3 montre plus en détail un circuit de répartition faisant partie du système de la figure 1.
- La figure 4 montre plus en détail un circuit de recomposition faisant partie du système représenté à la figure 1.

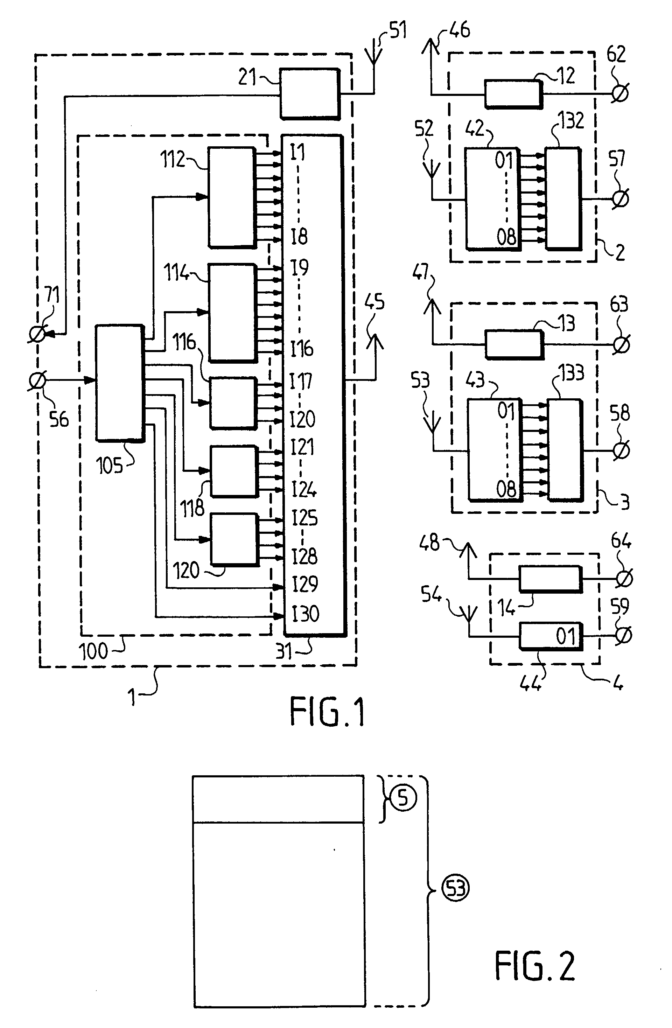

A la figure 1, le système de transmission de l'invention convient plus particulièrement aux réseaux de radiomobiles communiquant par l'intermédiaire d'une station de base 1. Autour de cette station de base 1 gravitent trois stations mobiles 2, 3 et 4 considérées comme des stations satellites. Ces différentes stations sont composées d'une partie émission et d'une partie réception. La partie émission des stations mobiles 2, 3 et 4 porte respectivement les références 12, 13 et 14 tandis que la partie réception de la station de base 1 porte la référence 21. La partie émission de la station de base 1 est référencée par 31 et les parties réception des stations mobiles 2, 3 et 4 par 42, 43 et 44. Les liaisons entre les différentes stations s'effectuent par voies hertzienne. A cet effet les différentes stations 1, 2, 3 et 4 sont pourvues respectivement d'antennes d'émission 45, 46, 47 et 48 et d'antennes de réception 51, 52, 53 et 54. La liaison radio utilisée est formée, par exemple, de 30 canaux de 25 MHz dans la bande hyperfréquence de 60 Ghz. Ces parties émission et réception fonctionnent en multiplex fréquentiel et gèrent l'allocation des canaux fréquentiels. Ainsi la partie émission 31 et la partie réception 21 peuvent utiliser la capacité totale de la liaison soit 30 canaux de 25 MHz, tandis que les parties émission et réception des stations 2 et 4 gèrent huit canaux et que les parties émission et réception de la station 4 n'en gère qu'un seul. A chaque canal, correspond un accès pour une voie entrante et un accès pour une voie sortante. La partie 31 possède 30 accès de voies entrantes I1 à I30. Les parties réception 42 et 43 sont munies de huit accès de voies sortantes 01 à 08 tandis que la partie 44 n'en possède qu'un seul 01. Les parties émission 12, 13 et 14 ne sont pas détaillées mais possèdent des accès de voies entrantes en nombre correspondant à leur partie réception associée. De même, la partie réception 21 est munie d'accès de voies sortantes dont le nombre est égal à celui des accès de voies entrantes de la partie émission 31. Les parties émission et réception qui viennent d'être mentionnées sont du type habituellement utilisé dans les réseaux de radiomobiles et n'ont pas de ce fait à être décrites plus en détail. Ces parties fixent, parmi un ensemble de canaux alloués, les canaux fréquentiels les plus aptes à réaliser une liaison entre deux stations. A chaque voie correspond en principe un canal fréquentiel différent.

Le système de l'invention a pour but de transmettre, dans le cadre de l'exemple décrit, des informations selon la technique ATM (Asynchronous Transfert Mode) qui s'adapte bien au système RNIS à large bande. On rappelle que le système ATM qui est mentionné à l'article précité, consiste à découper l'information en paquets ou plutôt en cellules dont le format est explicité à la figure 2. Ces cellules sont formées, par exemple de 53 octets parmi lesquels cinq sont des octets de service utilisés notamment pour leur routage.

L'information à transmettre depuis la station de base 1 est appliquée sous la forme d'une succession de cellules à un accès 56 de la station 1. Les informations transmises vers les stations mobiles peuvent être restituées sur des accès 57, 58 et 59 de ces stations 2, 3 et 4. Les informations, toujours sous forme de cellules ATM, peuvent aussi être transmises en sens inverse depuis les stations mobiles vers la station de base. Pour cela, elles peuvent être appliquées à des accès 62, 63 et 64 de ces mêmes stations 2, 3 et 4 afin d'être restituées à un accès 71 de la station de base 1.

Selon l'invention, on a prévu un circuit de répartition d'émission 100 formé d'un répartiteur de cellules 105 pour que les cellules relatives à une communication, appliquées à la borne 56 soient aiguillées soit sur un des circuits de répartition multivoies 112, 114, 116, 118 et 120 adapté au débit à transmettre soit directement sur des accès radio de la partie radio 31. Dans cet exemple décrit, les circuits 112 et 114 sont des circuits à huit voies et les circuits 118 et 120 à quatre voies. En correspondance, des circuits de recomposition de réception 132 et 133 sont prévus au niveau des stations mobiles 2 et 3.

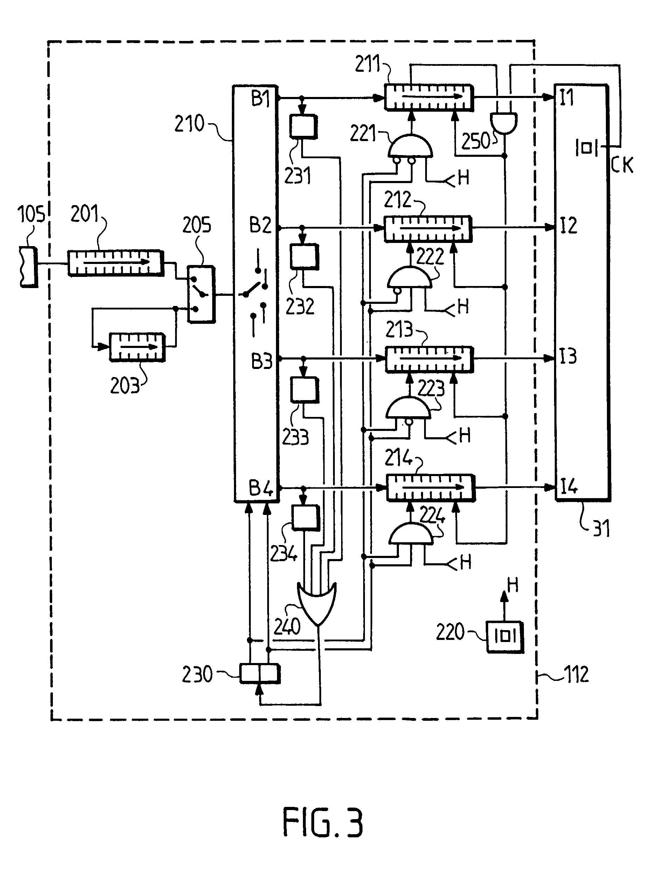

La figure 3 montre en détail le circuit de répartition multivoies 112, la structure des autres circuits multivoies en découlant directement.

Les cellules provenant de l'accès 56 aiguillées par le circuit 105 sont emmagasinées dans une première mémoire 201 du type première donnée entrée, première donnée sortie plus connue sous le nom de mémoire FIFO. Une deuxième mémoire 203 du même type rebouclée sur elle-même contient une structure d'élément binaires représentant une cellule ATM vide. Un multiplexeur 205 permet donc en se commutant judicieusement sur la sortie de l'une de ces mémoires 201 ou 203 d'insérer des cellules vides dans le flot de données à sa sortie. Un commutateur de données 210 fournit à un rythme régulier les cellules à quatre branches de sorties B1, B2, B3 et B4. Ces différentes branches sont reliées par l'intermédiaire de quatre mémoires 211, 212, 213 et 214 du type première donnée entrée, première donnée sortie aux accès I1, I2, I3 et I4 de la partie émission 31. Ces mémoires 211, 212, 213 et 214 sont écrites au rythme de l'horloge locale 220 qui fournit des signaux d'horloge H à ces mémoires par l'intermédiaire de portes ET 221, 222, 223 et 224. Ces portes sont ouvertes tour à tour au moyen d'un compteur 230 à deux positions. On remarquera la présence d'inverseurs à des entrées de ces portes pour qu'une seule soit rendue passante pour toutes configurations d'éléments binaires contenues dans le compteur 230. Au niveau de chaque branche B1, B2, B3 et B4 sont branchés respectivement des circuits délimiteurs de cellules 231, 232, 233 et 234. Ces circuits fournissent un signal dès qu'une cellule a circulé sur la branche. Une porte OU 240 recueille tous ces signaux afin de faire progresser le contenu du compteur 230. Les mémoires 211, 212, 213 et 214 sont lues au rythme de l'horloge de la partie émission 31, disponible sur un accès CK, à condition qu'une porte ET 250 soit rendue passante. Ceci est effectué par un signal de remplissage fourni par n'importe laquelle des mémoires 211, 212, 213 et 214 lorque ces mémoires contiennent un nombre de données correspondant à un certain nombre de cellules.

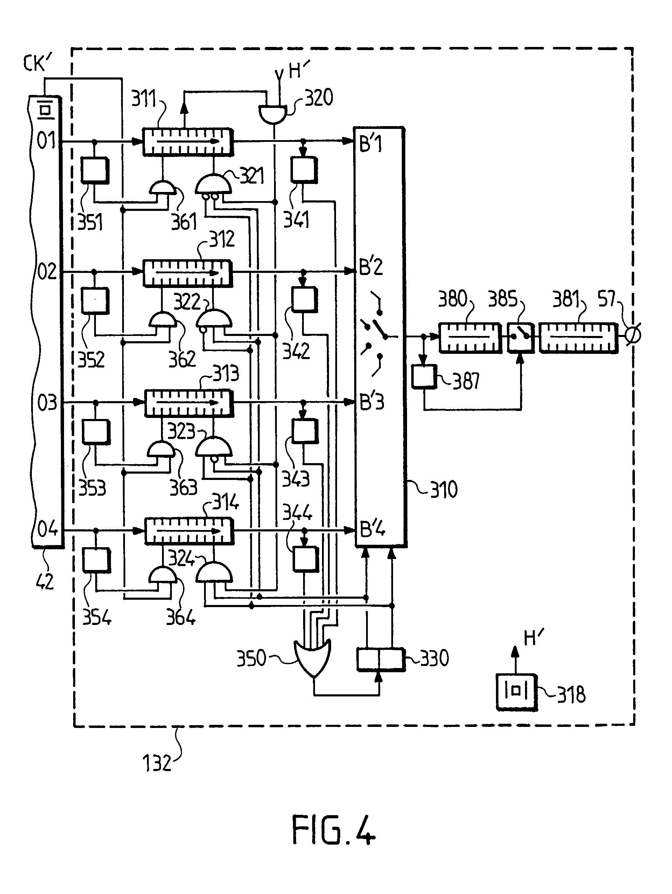

La figure 4 montre en détail le circuit de recomposition 132. Ce circuit permet de reconstituer la suite des cellules transmises sur différents canaux et rendues disponibles sur des branches d'entrée B'1, B'2, B'3 et B'4 d'un multiplexeur 310. Des mémoires 311, 312, 313 et 314 du type première donnée entrée, première donnée sortie interconnectent les sorties 01, 02, 03 et 04 de la partie réception avec les branches d'entrée B'1, B'2, B'3 et B'4. Ces mémoires 311, 312, 313 et 314 sont écrites au rythme de l'horloge de la partie réception 42 dont les signaux sont disponibles sur un accès CK' et sont lues au rythme de l'horloge locale 318 qui fournit des signaux d'horloge H' à ces mémoires par l'intermédiaire d'une première porte ET 320 et de portes ET 321, 322, 323 et 324 affectées chacune à une des mémoires. Ces portes ET 321, 322, 323 et 324 sont ouvertes tour à tour au moyen d'un compteur 330 à deux positions. On remarquera la présence d'inverseurs à des entrées de ces portes pour qu'une seule soit rendue passante pour toute configuration d'éléments binaires contenue dans le compteur 330. La lecture de ces mémoires 311, 312, 313 et 314 ne peut avoir lieu que si une de ces mémoires a atteint un certain degré de remplissage ; sur la figure, c'est la mémoire 311 qui rend passante la porte 320. Au niveau des branches d'entrée B'1, B'2, B'3 et B'4, on a prévu différents circuits délimiteurs de cellules 341, 342, 343 et 344. Ces circuits fournissent, comme il a été déjà dit, un signal dès qu'une cellule a circulé sur la branche. Une porte OU 350 recueille tous ces signaux afin de faire progresser le contenu du compteur 330. Au niveau des accès 01, 02, 03 et 04 sont branchés différents circuits détecteurs de cellules 351, 352, 353 et 354 qui fournissent un signal actif dès que la première cellule a été détectée au niveau de ces accès 01, 02, 03 et 04. Ceci permet de rendre passantes les portes ET 361, 362, 363 et 364 affectées respectivement aux mémoires 311, 312, 313 et 314. Les signaux d'horloge de la partie réception disponibles sur l'accès CK' peuvent alors être appliqués à ces mémoires 311, 312, 313 et 314.

A la sortie du multiplexeur 310 différent éléments ont été ajoutés pour éliminer les cellules vides insérées éventuellement par les éléments 201, 202 et 205 du circuit de répartition multivoies 112. La sortie du multiplexeur 310 est connectée à un montage en cascade de deux mémoires 380 et 381 du type première donnée entrée, première donnée sortie, reliées par l'intermédiaire d'un interrupteur 385. Cet interrupteur est manoeuvré par le signal de sortie d'un circuit détecteur de cellules vides 387. Comme la capacité de la mémoire 380 correspond à une cellule, lorsque le signal de sortie du circuit 387 devient actif cela signifie que la cellule contenue dans la mémoire 380 est une cellule vide, l'interrupteur 385 est alors ouvert et l'écriture de la mémoire 381 bloquée.

Un tel système fonctionne de la manière suivante. Lors d'une demande de communication à établir depuis la station de base entre un abonné demandeur et un abonné demandé rattaché à une station mobile, le débit à transmettre est connu. Le circuit répartiteur de cellules aiguille les cellules relatives à cette communication vers un circuit de répartition de voies pouvant assurer ce débit. Si le débit requis nécessite une capacité de débit correspondant à trois voies, un circuit de répartition pouvant gérer ce nombre de voies ou un nombre supérieur sera sélectionné, par exemple l'un des circuits de répartition 116 ou 118 ou 120 muni de quatre accès de voies entrantes. Cela implique que le circuit de réception de l'abonné demandé soit compatible avec ce débit. Ensuite le circuit de répartition va émettre, en parallèle, les différentes cellules sur les quatre canaux. Pour alimenter ces quatre canaux, on insère des cellules vides au moyen des éléments 201, 202 et 205. Pour reconstituer l'information transmise du côté réception, il faut mettre dans le bon ordre les différentes cellules reçues en parallèle sur les accès de voies sortantes émises et il faut aussi supprimer les cellules vides. Le bon ordre est assuré par le fait que l'émission des cellules non vides s'effectue cycliquement en empruntant des voies entrantes dans le même ordre et en commençant par la première voie entrante I1 : là où est prévu un détecteur de remplissage de mémoire 211 quant à la suppression des cellules vides cela est assuré par les éléments 380, 381, 385 et 387.

## Revendications

1. Système de transmission de données offrant une pluralité de canaux élémentaires présentant un débit binaire élémentaire pour transmettre lesdites données, système comportant au moins :
- une station de base (1) comportant un circuit de répartition (100) des canaux élémentaires,
- une pluralité de station satellites (2, 3 ou 4, etc..) comportant un circuit de recomposition de réception pour recevoir des données transmises par lesdits canaux élémentaires,
caractérisé en ce que le circuit de répartition est formé de circuit de répartition multivoies (112, 114, 116....) pour affecter à chaque station satellite un canal utilisateur formé d'un nombre variable de canaux élémentaires en fonction du débit exigé pour une communication avec la station de base.

2. Système de transmission pour transmettre des informations selon la revendication 1 , caractérisé en ce que les données à transmettre se présentent sous forme de succession de cellules d'information, caractérisé en ce qu'il est prévu un circuit de répartition (105) pour transmettre sur différents canaux élémentaires des cellules successives.

3. Système de transmission pour transmettre des informations selon la revendication 2, avec un certain débit, caractérisé en ce qu'il est prévu un circuit d'insertion de cellules vides (203) pour que les débits de canaux soient compatibles au certain débit.

4. Station de base convenant à un système comportant au moins une station de base (1) et au moins une station satellite (2, 3, 4...) selon l'une des revendication 1 à 3 comportant :
- un accès d'entrée de données (56) pour recevoir les données à transmettre selon un certain débit pendant une période de communication,
- une partie émission (31) pour émettre dans au moins un canal de transmission des informations présentes sur au moins un de ses accès de voies entrantes (I1...I30) selon un débit de canal,
- un accès de sortie de données (71) pour fournir les données transmises,
- un circuit de répartition d'émission (105) pour raccorder ledit accès d'entrée de données à un certain nombre d'accès de voies entrantes (I1...I30) en fonction du débit pendant ladite période de communication,
- une partie réception (21)-pour recevoir les informations provenant d'au moins un desdits canaux pour les fournir sur au moins un de ses accès de voies sortantes,
- un circuit de recomposition de réception pour raccorder, en correspondance, un nombre d'accès de voies sortantes à l'accès de sortie.

5. Station satellite convenant à un système comportant au moins une station de base et au moins une station satellite selon l'une des revendication 1 à 3 comportant :
- un accès d'entrée de données (62, 63, 64) pour recevoir les données à transmettre selon un certain débit pendant une période de communication,
- une partie émission (12, 13, 14,...) pour émettre dans au moins un canal de transmission des informations présentes sur au moins un de ses accès de voies entrantes selon un débit de canal,
- une partie réception (42, 43, 44...) pour recevoir les informations provenant d'au moins un desdits canaux pour les fournir sur au moins un de ses accès de voies sortantes (01, 02,...08)
- un accès de sortie de données (58) pour fournir les données transmises,
- un circuit de répartition d'émission pour raccorder ledit accès d'entrée de données à un certain nombre d'accès de voies entrantes en fonction du débit pendant ladite période de communication,
- un circuit de recomposition de réception (132, 133, 134) pour raccorder, en correspondance, un nombre d'accès de voies sortantes à l'accès de sortie.

## Claims

1. A data transmission system which offers a plurality of elementary channels which have an elementary bit rate for transmitting said data, the system comprising at least:
- a base station (1) which includes a distribution circuit (100) for elementary channels,
- a plurality of satellite stations (2, 3 or 4, etc.) which include a restoring circuit for receiving data which are transmitted by said elementary channels,
characterized in that the distribution circuit is in the form of a multi-path distribution circuit (112, 114, 116, ... ) for assigning to each satellite station a user channel in the form of a variable number of elementary channels as a function of the rate required for a communication with the base station.

2. A transmission system for transmitting data signals as claimed in Claim 1, for which the transmit data are presented in the form of a succession of information cells, characterized in that a transmit distribution circuit (105) is provided for transmitting successive cells over various elementary channels.

3. A transmission system for transmitting data as claimed in Claim 2 at a certain data rate, characterized in that there is provided an empty cell insertion circuit (203) for the channel rates to be compatible to a certain rate.

4. A base station suitable for use in a system comprising at least a base station (1) and at least a satellite station (2, 3, 4) as claimed in one of the Claims 1 to 3, comprising:
- a data input port (56) for receiving the transmit data at a certain rate during a communication period,
a transmit section (31) for transmitting information signals present on at least one of its incoming channel ports (I1, ..., I30) over at least one transmit channel at a channel rate,
a data output port (71) for providing the transmitted data,
- a transmit distribution circuit (105) for connecting said data input port to a certain number of incoming channel ports (I1, ..., I30) as a function of the rate during said communication period.
- a receive section (21) for receiving the information signals coming from at least one of said channels so as to present them at least at one of its outgoing channel ports,
- a receive restoring circuit for connecting a number of outgoing channel ports to the output port.

5. A satellite station suitable for use in a system comprising at least a base station and at least a satellite station as claimed in one of the Claims 1 to 3, comprising:
- a data input port (62, 63, 64) for receiving the transmit data at a certain rate during a communication period,
a transmit section (12, 13, 14) for transmitting over at least one transmit channel data which are present on at least one of its incoming channel ports at a channel rate,
- a receive section (42, 43, 44...) for receiving the data coming from at least one of said channels so as to present them at least on one of its outgoing channel ports (01, 02, ..., 08),
a data output port (58) for producing the transmitted data,
- a transmit distribution circuit for connecting said data input port to a certain number of incoming channel ports as a function of the rate during said communication period,
- a receive restoring circuit (132, 133, 134) for correspondingly connecting a number of outgoing channel ports to the output port.

## Patentansprüche

1. System zur Übertragung von Information, das eine Vielzahl elementarer Kanäle mit einer elementaren binären Bitrate bietet, um die besagten Daten zu übertragen, wobei das System mindestens besteht aus:
- einer Basisstation (1), die eine Schaltung zur Aufteilung der elementaren Kanäle (100) enthält,
- einer Vielzahl an Satellitenstationen (2, 3 oder 4 etc.), mit einer Empfangs-Neuzuordnungsschaltung, um die über die besagten elementaren Kanäle übertragenen Daten zu empfangen,
dadurch gekennzeichnet, daß die Aufteilungsschaltung aus Mehrweg-Aufteilungsschaltungen (112, 114, 116 ...) besteht, um jeder Satellitenstation einen Anwenderkanal zuzuteilen, der aus einer variablen Anzahl elementarer Kanäle gebildet wird, je nach der für eine Kommunikation mit der Basisstation erforderlichen Bitrate.

2. System zur Übertragung von Information nach Anspruch 1, dadurch gekennzeichnet, daß die zu übertragenden Daten die Form von aufeinanderfolgenden Informationszellen haben, dadurch gekennzeichnet, daß eine Aufteilungsschaltung (105) vorgesehen ist, um die aufeinanderfolgenden Zelle über verschiedene elementare Kanäle zu übertragen.

3. System zur Übertragung von Information nach Anspruch 2, mit einer gewissen Bitrate, dadurch gekennzeichnet, daß eine Schaltung zum Einfügen leerer Zellen (203) vorgesehen ist, damit die Bitraten der Zellen mit einer gewissen Bitrate kompatibel sind.

4. Systemkompatible Basisstation mit mindestens einer Basisstation (1) und mindestens einer Satellitenstation (2, 3, 4 ...) nach einem der Ansprüche 1 bis 3, bestehend aus:
- einem eingehenden Datenzugang (56) für den Erhalt der mit einer gewissen Bitrate über einen Kommunikationszeitraum zu übertragenden Daten,
- einem Sendeteil (31) zum Senden über mindestens einen Übertragungskanal der an mindestens einem der eingehenden Zugangswege (I1...I30) vorhandenen Informationen entsprechend einer Bitrate des Kanals,
- einem ausgehenden Datenzugang (71) zum Bereitstellen der übertragenen Daten,
- einer Sende-Aufieilungsschaltung (105) zum Verbinden des besagten eingehenden Datenzugangs mit einer gewissen Reihe eingehender Zugangswege (I1...I30) entsprechend der Bitrate über den besagten Kommunikationszeitraum,
- einem Empfangsteil (21) für den Erhalt der Informationen aus mindestens einem der besagten Kanäle, um sie mindestens einem der ausgehenden Zugangswege zuzuführen,
- einer Empfangs-Neuzuordnungsschaltung, um eine entsprechende Reihe ausgehender Zugangswege mit dem ausgehenden Zugang zu verbinden.

5. Systemkompatible Satellitenstation mit mindestens einer Basisstation und mindestens einer Satellitenstation nach einem der Ansprüche 1 bis 3, bestehend aus:
- einem eingehenden Datenzugang (62, 63, 64) für den Erhalt der mit einer gewissen Bitrate über einen Kommunikationszeitraum zu übertragenden Daten,
- einem Sendeteil (12, 13, 14 ...) zum Senden über mindestens einen Übertragungskanal der an mindestens einem der eingehenden Zugangswege vorhandenen Informationen entsprechend einer Bitrate des Kanals,
- einem Empfangsteil (42, 43, 44...) für den Erhalt der Informationen aus mindestens einem der besagten Kanäle, um sie mindestens einem der ausgehenden Zugangswege (01, 02, ... 08) zuzuführen,
- einem ausgehenden Datenzugang (58) zum Bereitstellen der übertragenen Daten,
- einer Sende-Aufteilungsschaltung zum Verbinden des besagten eingehenden Datenzugangs mit einer gewissen Reihe eingehender Zugangswege entsprechend der Bitrate über den besagten Kommunikationszeitraum,
- einer Empfangs-Neuzuordnungsschaltung (132, 133, 134), um eine entsprechende Reihe ausgehender Zugangswege mit dem ausgehenden Zugang zu verbinden.
